# EUROPÄISCHE PATENTSCHRIFT

(11) **EP 2 016 661 B1**
(45) Veröffentlichungstag und Bekanntmachung des Hinweises auf die Patenterteilung: **28.10.2009**
(21) Anmeldenummer: 07728698.7
(22) Anmeldetag: 02.05.2007
(51) Int. Cl.: H02K 3/16, H02K 3/28

(54) **ELEKTRISCHE MASCHINE, INSBESONDERE SYNCHRONMOTOR, MIT REDUNDANTEN STATORWICKLUNGEN**
ELECTRICAL MACHINE, IN PARTICULAR SYNCHRONOUS MOTOR, WITH REDUNDANT STATOR WINDINGS
MOTEUR ÉLECTRIQUE, NOTAMMENT MOTEUR SYNCHRONE, AVEC ENROULEMENTS DE STATOR REDONDANTS

(30) Priorität: 08.05.2006 DE 102006021354
(43) Veröffentlichungstag der Anmeldung: 21.01.2009
(73) Patentinhaber: SIEMENS AKTIENGESELLSCHAFT, 80333 München (DE)
(72) Erfinder: BADE, Maria, 13403 Berlin (DE); MÖHLE, Axel, 12163 Berlin (DE)
(86) Internationale Anmeldenummer: PCT/EP2007/054244
(87) Internationale Veröffentlichungsnummer: WO 2007/128747

(56) Entgegenhaltungen:
- WO-A-02/15367
- WO-A-84/03400
- JP-A- 5 146 124
- US-A- 4 859 885

## Beschreibung

Die Erfindung betrifft eine elektrische Maschine mit einem Stator und einem Rotor, wobei der Stator Statornuten aufweist, in denen eine Statorwicklung mit redundanten und zumindest dreiphasigen Wicklungssystemen verlegt ist. Die Erfindung betrifft weiterhin einen elektrischen Antrieb, welcher eine derartige elektrische Maschine sowie eine der Polzahl der elektrischen Maschine entsprechende Anzahl von Umrichtern zur elektrischen Versorgung der redundanten und zumindest dreiphasigen Wicklungssysteme der elektrischen Maschine aufweist.

Derartige elektrische Maschinen, insbesondere Elektromotoren wie Asynchronmotoren oder Synchronmotoren, werden für vielfältige Antriebsaufgaben benötigt, wie z.B. zum Antrieb von Verdichtern oder Kompressoren. Zum Antrieb von schnelllaufenden Verdichtern sind Synchronmotoren vorteilhaft. Vorzugsweise sind Synchronmotoren als zweipolige, geblechte oder massive, Vollpolläufer bzw. Turboläufer ausgeführt.

Die zuvor genannten elektrischen Maschinen werden vorzugsweise über einen oder mehrere parallel geschaltete Umrichter gespeist. Der Umrichter ist insbesondere ein Spannungszwischenkreisumrichter zur Erzeugung einer drei- oder mehrphasigen Ausgangsspannung. Die Umsetzung erfolgt über einen Spannungszwischenkreis mit einem Speicherkondensator. Der Spannungszwischenkreis speist ausgangsseitig einen Pulswechselrichter als Teil des Umrichters.

In bestimmten Anwendungsgebieten kann eine Redundanz eines elektrischen Antriebs erforderlich oder gar zwingend notwendig sein. Bei einem elektrischen Antrieb der oben genannten Art besteht die prinzipiell die Möglichkeit, die Umrichter und/oder die elektrische Maschine redundant auszuführen.

Eine bekannte Maßnahme ist es, bei zweipoligen und an einem Stromzwischenkreisumrichter betriebenen Synchronmotoren zwei Wicklungssysteme bzw. Drehstromwicklungen vorzusehen, die um 30° gegeneinander geschwenkt ausgeführt sind. Die beiden Wicklungssysteme werden von je einem Umrichter gespeist.

Zur Erzielung einer umrichterseitigen Redundanz kann z.B. ein dritter Umrichter vorgesehen sein, der für einen ausgefallenen Umrichter einspringen kann. Alternativ kann die Nennleistung im Fall von nur zwei Umrichtern derart ausgelegt sein, dass bei Ausfall eines Umrichters der verbleibende Umrichter die Einspeisung in vollem Umfang übernehmen kann. Entsprechend leistungsfähig ist ein derartiger redundanter Umrichter auszulegen. Der Begriff "Nennleistung" bezieht sich üblicherweise auf die im Dauerbetrieb maximal aufgenommene elektrische Leistung.

Fällt hingegen eines der Wicklungssysteme auf der Motorseite aus, wie z.B. durch einen Kurzschluss, so steht unabhängig von der umrichterseitigen Auslegung nur noch die Hälfte der Nennleistung bzw. die Hälfte des Drehmoments der elektrischen Maschine zur Verfügung.

Um eine umrichter- und motorseitige Redundanz zu erreichen, ist es nachteilig erforderlich, eine solche elektrische Maschine leistungstechnisch derart auszulegen, dass bei Ausfall eines der beiden zumindest dreiphasigen Wicklungssysteme das andere Wicklungssystem den gesamten Strom für das volle Drehmoment führen kann. Die elektrische Maschine muss folglich stark überdimensioniert werden, wobei im normalen Betriebsfall jedes der Wicklungssysteme nur die Hälfte des maximalen Stroms führt.

Aus der WO 8403400 ist eine elektrische Maschine nach dem Oberbegriff des Anspruchs 1 bekannt, die vierpolig ausgelegt ist und vier redundante Wicklungssysteme aufweist.

Es ist eine Aufgabe der Erfindung, eine elektrische Maschine mit redundanten Wicklungssystemen anzugeben, welche in geringerem Maße überdimensioniert werden muss und somit bei gleicher elektrischer Nennleistung eine kleinere Baugröße aufweisen kann.

Eine weitere Aufgabe der Erfindung ist es, einen geeigneten elektrischen Antrieb mit einer solchen Maschine anzugeben.

Diese Aufgabe wird durch eine elektrische Maschine gemäß Anspruch 1 gelöst. Weitere Ausführungsformen sind in den abhängigen Ansprüchen 2 bis 9 angegeben. Im Anspruch 10 ist ein geeigneter elektrischer Antrieb mit einer derartigen elektrischen Maschine angegeben. Vorteilhafte Ausführungsformen der elektrischen Maschine sind in den Ansprüchen 11 und 13 enthalten.

Erfindungsgemäß weist die elektrische Maschine eine Vielzahl von Polen mit einer Polzahl von mindestens vier auf. Weiterhin weist die elektrische Maschine eine Anzahl von Statornuten auf, die dem Produkt aus einer Phasenzahl und dem Quadrat der Polzahl oder einem ganzzahligen Vielfachen davon entspricht. In den meisten Fällen ist die elektrische Maschine dreiphasig ausgelegt, das heißt die elektrische Maschine weist eine Phasenzahl von drei auf. Im Falle einer vierpoligen dreiphasigen elektrischen Maschine ergibt sich folglich eine Nutzahl von 48 oder einem ganzzahligen Vielfachen davon.

Weiterhin weist die elektrische Maschine eine der Polzahl entsprechende Anzahl von Wicklungssystemen bzw. Drehstromwicklungen auf. Jeweils eine der Polzahl entsprechende Anzahl von phasengleichen Strängen ist je zu einer Phasenstranggruppe zusammengefasst. Die Phasenstranggruppen sind phasenzyklisch und Pol für Pol in den Statornuten des Stators verlegt. Je Pol und Phasenstranggruppe ist ein der Polzahl entsprechender Nutbereich vorhanden. Die Nutbelegung erfolgt derart, dass die phasengleichen Stränge entsprechend ihrer Nummerierung gleichmäßig auf die jeweiligen Nuten der zugehörigen Nutbereiche verteilt sind.

Durch die erfindungsgemäße Nutbelegung werden vorteilhaft Phasenversätze in den parallel verlegten Wicklungssystemen bei phasensynchroner Stromerregung mittels der Umrichter vermieden. Derartige Phasenversätze sind vor allem bei Einspeisung durch Spannungszwischenkreisumrichter kritisch, insbesondere in Hinblick auf die Zunahme elektrischer Verluste und Oberwellenanteile in der elektrischen Maschine.

Wenn bei Ausfall eines der Wicklungssysteme keine Änderung der Stromeinspeisung bei den verbleibenden Wicklungssystemen erfolgt, stehen bei der vorliegenden Erfindung nicht nur die Hälfte, sondern 3/4 des Nenndrehmoments zur Verfügung. Bei einer elektrischen Maschine mit einer Polzahl von 6 stehen 5/6 und bei einer elektrischen Maschine mit einer Polzahl von 8 sogar 7/8 des Nenndrehmoments zur Verfügung.

Ein weiterer großer Vorteil ist es, dass eine elektrische Maschine gemäß der Erfindung kompakter realisiert werden kann. Insbesondere steht nach Ausfall eines der Wicklungssysteme weiterhin die volle Nennleistung bzw. das volle Nenndrehmoment dauerhaft zur Verfügung, wenn im Falle einer vierpoligen elektrischen Maschine diese hinsichtlich der technischen Auslegung der Wicklungssysteme um nur 1/3 überdimensioniert ist und die Stromerregung bei den verbleibenden Wicklungssystemen erhöht wird.

Im Gegensatz ist bei einer zweipoligen elektrischen Maschine nach dem Stand der Technik die Stromwicklung auf das Doppelte überzudimensionieren.

Ein weiterer Vorteil ist es, dass bereits im Falle einer nur vierpoligen elektrischen Maschine bei einem Ausfall eines weiteren Wicklungssystems oder gar eines dritten Wicklungssystems zumindest noch ein Notbetrieb möglich ist, auch wenn in diesem Falle die volle Nennleistung bzw. das volle Nenndrehmoment in der Regel nicht mehr zur Verfügung steht.

Dagegen ist bei Ausfall des zweiten Wicklungssystems bei der zuvor beschriebenen zweipoligen elektrischen Maschine überhaupt kein Weiterbetrieb, insbesondere auch kein Notbetrieb, möglich.

In einer Ausführungsform der Erfindung sind die phasengleichen Stränge entsprechend ihrer Nummerierung von Pol zu Pol zyklisch durchgetauscht. Durch die zyklische Vertauschung erfolgt die zuvor beschriebene gleichmäßige Verteilung der phasengleichen Stränge entlang des Statorinnenumfangs. Die zyklische Vertauschung gewährleistet eine gleichbleibende Verteilung der Stränge auf die hierfür vorgesehenen Nuten.

Alternativ kann gemäß einer weiteren Ausführungsform der Erfindung die Belegung der Nuten von phasengleichen Strängen derart erfolgen, dass sich diese um maximal zwei Nutpositionen von Pol zu Pol entsprechend ihrer Nummerierung unterscheiden. Dadurch erfolgt die Verteilung der phasengleichen Stränge auf den vorgesehenen Nutbereich noch gleichmäßiger. Im Vergleich zur vorherigen Nutbelegung tritt nicht er Fall ein, dass sich die Nutposition zwischen zwei Polen sprungartig ändert. Die maximale Sprungweite entspricht der Polzahl der elektrischen Maschine, verringert um den Wert 1.

Gemäß einer weiteren Ausführungsform weist der Stator eine Zweischichtwicklung mit einer oberen Wicklungsschicht und einer unteren Wicklungsschicht auf. Die obere und die untere Wicklungsschicht sind um eine Sehnung gegeneinander versetzt.

In einer besonderen Ausführungsform ist die elektrische Maschine eine Synchronmaschine, insbesondere ein Synchronmotor. Der Synchronmotor kann eine Rotorwicklung zur Magnetfelderzeugung aufweisen oder alternativ permanenterregt ausgeführt sein.

Die erfindungsgemäße Verlegung der redundanten Wicklungssysteme bzw. die Nutbelegung ist auch bei einer Asynchronmaschine, insbesondere bei einem Asynchronmotor, von Vorteil.

Im Besonderen ist die elektrische Maschine eine Großmaschine mit einer Nennleistung von mindestens 10 kW, insbesondere von mindestens 1 MW. Prinzipiell ist die erfindungsgemäße Verlegung der redundanten Wicklungssysteme auch bei elektrischen Maschinen mit einer geringeren Leistung möglich.

Gemäß einer besonders vorteilhaften Ausführungsform der Erfindung sind die in den Statornuten verlegten redundanten und zumindest dreiphasigen Wicklungssysteme elektrisch derart ausgelegt, dass die elektrische Maschine bei Ausfall oder fehlender Einspeisung eines der Wicklungssysteme weiterhin mit ihrer Nennleistung bzw. ihrem Nenndrehmoment betreibbar ist. In diesem Fall ist, wie zuvor beschreiben, der Ständerstrom bzw. Statorstrom in den verbleibenden Wicklungssystemen zu erhöhen, so dass die maximale Nennleistung bzw. das maximale Nenndrehmoment der elektrischen Maschine zur Verfügung steht.

Vorzugsweise ist die elektrische Maschine eine 4-polige Maschine, welche vier in den Statornuten verlegte redundante dreiphasige Wicklungssysteme aufweist.

Die Aufgabe der Erfindung wird weiterhin durch einen elektrischen Antrieb gelöst, welcher eine elektrische Maschine gemäß der Erfindung sowie zumindest einen Umrichter zur elektrischen Versorgung der redundanten und zumindest dreiphasigen Wicklungssysteme der elektrischen Maschine aufweist.

Ein derartiger Antrieb weist im Vergleich zu Antrieben des Stands der Technik eine verringerte Baugröße auf.

Damit ist der Vorteil verbunden, dass bei Ausfall eines Umrichters die verbleibenden Umrichter die elektrische Versorgung der Wicklungssysteme übernehmen können. In diesem Fall ist der elektrische Leistungsteil der Umrichter der elektrischen Maschine hinsichtlich des Ausgangsstroms stärker auszulegen. Im Falle einer vierpoligen elektrischen Maschine ist der Leistungsteil für einen um etwa 1/3 höheren Ausgangsstrom auszulegen.

Im Besonderen sind die Umrichter phasenstarr zueinander betreibbar. Dadurch vereinfacht sich die Ansteuerung der Umrichter.

Gemäß einer bevorzugten Ausführungsform sind die Umrichter Frequenzumrichter, so dass die Drehzahl der elektrischen Maschine und folglich auch die Drehzahl einer angetriebenen Komponente, wie z.B. eine Verdichtereinheit, variabel eingestellt werden kann.

Weitere vorteilhafte Eigenschaften der Erfindung ergeben sich aus deren beispielhafter Erläuterung anhand der Figuren. Es zeigt
- FIG 1: einen Längsschnitt durch eine elektrische Maschine nach dem Stand der Technik entlang ihrer Drehachse,
- FIG 2: einen Ausschnitt eines Blechschnitts eines Statorpa- kets einer elektrischen Maschine gemäß der Erfindung,
- FIG 3: einen elektrischen Antrieb mit einer zweipoligen dreiphasigen elektrischen Maschine mit redundanten Wicklungssystemen nach dem Stand der Technik und mit zwei Umrichtern zur elektrischen Versorgung der bei- den Wicklungssysteme,
- FIG 4: einen elektrischen Antrieb mit einer beispielhaft vierpoligen dreiphasigen elektrischen Maschine mit vier redundanten Wicklungssystemen und mit beispiel- haft vier Umrichtern zur elektrischen Versorgung der vier Wicklungssysteme gemäß der Erfindung,
- FIG 5: beispielhaft einen ersten Nutbelegungsplan mit einer einzigen Wicklungsschicht für den Fall einer vierpo- ligen dreiphasigen elektrischen Maschine gemäß der Erfindung,
- FIG 6: beispielhaft einen zweiten Nutbelegungsplan mit einer oberen und unteren Wicklungsschicht gemäß der Erfin- dung, die um eine Sehnung gegeneinander versetzt sind,
- FIG 7: einen Querschnitt durch eine elektrische Maschine mit der Nutbelegung gemäß FIG 5,
- FIG 8: schematisch die Verteilung phasengleicher Stränge auf die Nuten der zugehörigen Nutbereiche entsprechend ihrer Nummerierung und Pol für Pol gemäß der Erfin- dung und
- FIG 9: schematisch die Verteilung phasengleicher Stränge auf die Nuten der zugehörigen Nutbereiche entsprechend ihrer Nummerierung und Pol für Pol gemäß einer alter- nativen Ausführungsform zu FIG 8.

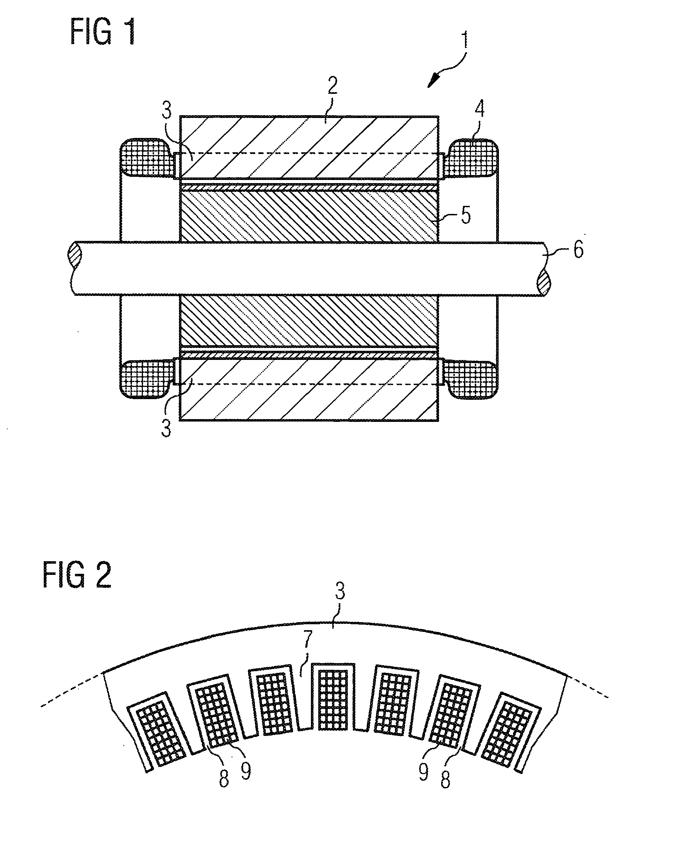

FIG 1 zeigt einen Längsschnitt durch eine elektrische Maschine 1 nach dem Stand der Technik entlang ihrer Drehachse. Die elektrische Maschine 1 weist einen Stator 2 sowie einen um ihre Drehachse gelagerten Rotor 5 auf. Der Stator 2 weist ein Statorpaket 3 mit einer Statorwicklung 4 zur Erzeugung eines magnetischen Drehfeldes auf. Die Statorwicklung 4 weist nicht weiter dargestellte mehrphasige, insbesondere dreiphasige, Wicklungssysteme auf. Üblicherweise sind das Statorpaket 3 und gegebenenfalls das Rotorpaket zur Reduzierung von Wirbelstromverlusten geblecht ausgeführt. Mit dem Bezugszeichen 6 ist eine Rotorwelle als Teil des Rotors 5 dargestellt.

FIG 2 zeigt einen Ausschnitt eines Blechschnitts eines Statorpakets 3 einer elektrischen Maschine gemäß der Erfindung. Die elektrische Maschine kann ein Elektromotor oder ein Generator sein. Die elektrische Maschine kann eine Synchronmaschine oder eine Asynchronmaschine sein. Die elektrische Maschine ist insbesondere eine Großmaschine mit einer Nennleistung von mindestens 10 kW, insbesondere mit einer Nennleistung von mindestens 1 MW. Die elektrische Großmaschine kann auch eine elektrische Nennleistung von mehreren 100 kW aufweisen.

Der Blechschnitt weist Zähne 7 und Nuten bzw. Statornuten 8 auf, in denen die Wicklungsstränge 9 der Wicklungssysteme der elektrischen Maschine verlegt sind. Im Beispiel der vorliegenden FIG 2 sind ausschnittsweise nur sieben Nuten 8 von insgesamt 48 Nuten 8 einer vierpoligen dreiphasigen elektrischen Maschine mit vier redundanten Wicklungssystemen gezeigt. Die Anzahl der Statornuten 8 entspricht gemäß der Erfindung dem Produkt aus einer Phasenzahl und dem Quadrat der Polzahl der elektrischen Maschine.

Gemäß der Erfindung entspricht die Anzahl der Wicklungssysteme der Polzahl der elektrischen Maschine. Im vorliegenden Beispiel weist die elektrische Maschine vier Wicklungssysteme auf.

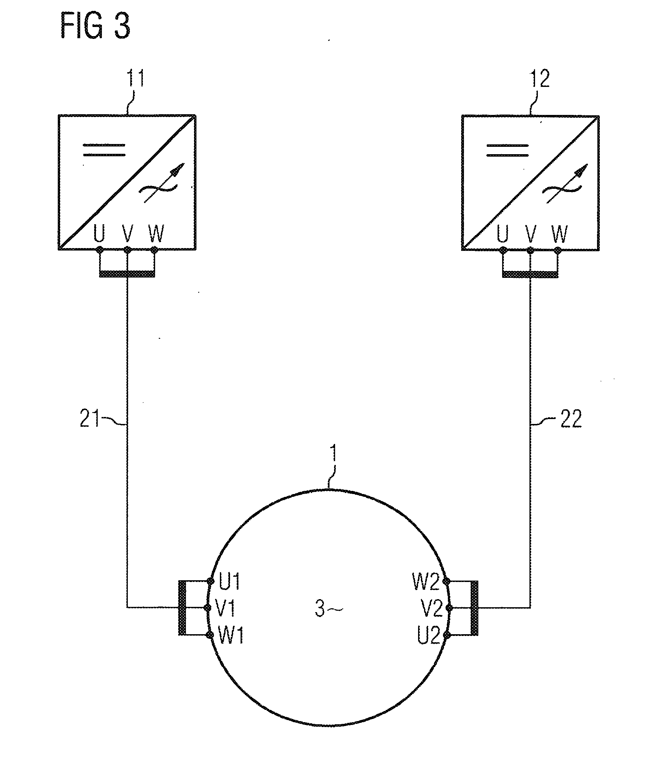

FIG 3 zeigt einen elektrischen Antrieb mit einer zweipoligen elektrischen Maschine 1 mit redundanten Wicklungssystemen nach dem Stand der Technik und mit zwei Umrichtern 11, 12 zur elektrischen Versorgung der beiden Wicklungssysteme. Bei den beiden Umrichtern 11, 12 handelt es sich beispielhaft um Pulswechselrichter, welche aus einer eingangsseitigen Gleichspannung eine dreiphasige Wechselspannung am Ausgang U, V, W bereitstellen. Die beiden Pulswechselrichter 11, 12 werden zueinander phasenstarr betrieben. Die Ausgänge U, V, W entsprechen den jeweiligen Phasen U, V, W des Umrichters 11, 12. Das Wellensymbol mit Pfeil im symbolisch dargestellten Kasten eines Umrichters 11, 12 zeigt an, dass es sich bei dem Pulswechselrichter um einen Frequenzumrichter zur möglichen Erzeugung einer frequenzvariablen dreiphasigen Wechselspannung handelt. Der Ausgang U, V, W je eines Umrichters 11, 12 ist über je eine dreiphasige Versorgungsleitung 21, 22 mit einem zugehörigen dreiphasigen Wicklungssystem U1, V1, W1; U2, V2, W2 verbunden. Wie bereits eingangs beschrieben, steht nach Ausfall eines der beiden Wicklungssysteme U1, V1, W1; U2, V2, W2 nur noch ca. die Hälfte der Nennleistung bzw. des Nenndrehmoments zur Verfügung.

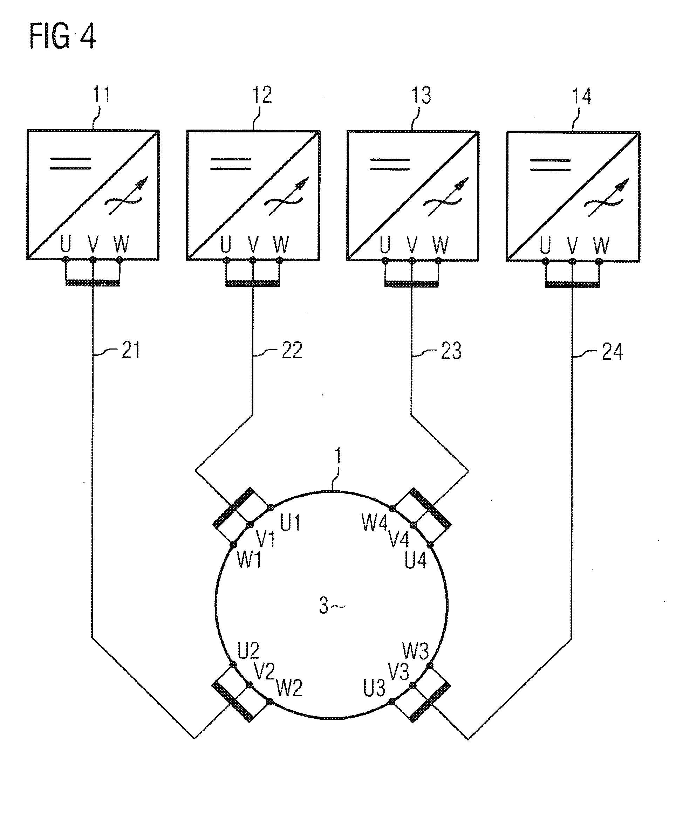

FIG 4 zeigt einen elektrischen Antrieb mit einer beispielhaft vierpoligen dreiphasigen elektrischen Maschine 1 mit vier redundanten dreiphasigen Wicklungssystemen U1, V1, W1; ...; U4, V4, W4 und mit beispielhaft vier Umrichtern 11-14 zur elektrischen Versorgung der vier Wicklungssysteme U1, V1, W1; ...; U4, V4, W4.

Die vier redundanten und dreiphasigen Wicklungssysteme U1, V1, W1; ...; U4, V4, W4 sind in den Statornuten 8 der elektrischen Maschine 1 verlegt. Insbesondere sind die redundanten und mindestens dreiphasigen Wicklungssysteme U1, V1, W1; ...; U4, V4, W4 elektrisch derart ausgelegt, dass die elektrische Maschine 1 bei Ausfall oder fehlender Einspeisung eines Wicklungssystems U1, V1, W1; ...; U4, V4, W4 weiterhin mit ihrer Nennleistung bzw. ihrem Nenndrehmoment betreibbar ist.

Allgemein weist der elektrische Antrieb zumindest eine der Polzahl PZ der elektrischen Maschine 1 entsprechende Anzahl von Umrichtern 11-14 zur elektrischen Versorgung der redundanten und zumindest dreiphasigen Wicklungssysteme U1, V1, W1; ...; U4, V4, W4 der elektrischen Maschine 1 auf. Zumindest ein Umrichter 11-14 ist zur elektrischen Versorgung der redundanten und zumindest dreiphasigen Wicklungssysteme U1, V1, W1; ...; U4, V4, W4 erforderlich. Die elektrische Maschine 1 gemäß FIG 4 kann alternativ eine gerade Polzahl von 6, 8, 10 oder mehr aufweisen. Die Phasenzahl der elektrischen Maschine 1 kann 4, 5, 6 oder mehr betragen.

Bei den Umrichtern 11-14 handelt es sich vorzugsweise um Pulswechselrichter bzw. um Frequenzumrichter zur Erzeugung einer zumindest dreiphasigen Wechselspannung am Ausgang U, V, W. Die Umrichter 11-14 (im Beispiel der FIG 4 sind dies die vier gezeigten Pulswechselrichter 11-14) werden zueinander phasenstarr bzw. phasensynchron betrieben. Der Ausgang U, V, W je eines Umrichters 11-14 ist über je eine dreiphasige Versorgungsleitung 21-24 mit einem zugehörigen dreiphasigen Wicklungssystem U1, V1, W1; ...; U4, V4, W4 verbunden. Wie bereits eingangs beschrieben, stehen nach Ausfall eines der vier Wicklungssysteme U1, V1, W1; U2, V2, W2 vorteilhaft noch ca. 3/4 der Nennleistung bzw. ca. 3/4 des Nenndrehmoments zur Verfügung.

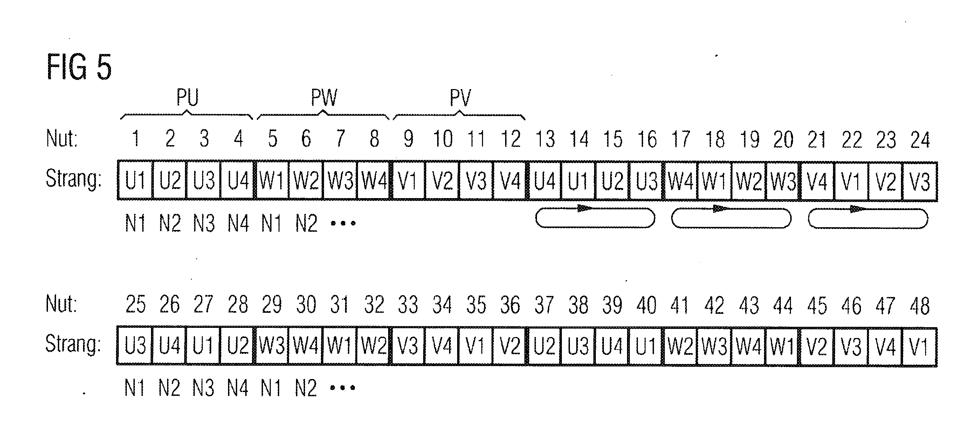

FIG 5 zeigt beispielhaft einen ersten Nutbelegungsplan mit einer einzigen Wicklungsschicht für den Fall einer vierpoligen dreiphasigen elektrischen Maschine. Die elektrische Maschine weist gemäß der Erfindung eine Anzahl NZ von Statornuten auf, die dem Produkt aus der Phasenzahl und dem Quadrat der Polzahl PZ oder einem Vielfachen davon entspricht. Im gezeigten Fall beträgt die Anzahl NZ der Statornuten 48. Ganzzahlige Vielfache dieser Anzahl, wie z.B. 96 oder 144, sind ebenfalls möglich. Die elektrische Maschine weist gemäß der Erfindung eine Polzahl PZ entsprechend Anzahl von Wicklungssystemen U1, V1, W1; ...; U4, V4, W4 auf. Es sind entsprechend dem Beispiel der FIG 5 vier Wicklungssysteme U1, V1, W1; ...; U4, V4, W4 vorhanden.

Wie die vorliegende FIG 5 zeigt, ist gemäß der Erfindung jeweils eine der Polzahl PZ entsprechende Anzahl von phasengleichen Strängen U1-U4, V1-V4, W1-W4 zu je einer Phasenstranggruppe PU, PV, PW zusammengefasst. Entsprechend der fortlaufenden Nummerierung der Statornuten von 1 bis 48 gehören die vier phasengleichen Stränge U1-U4 zur Phasenstranggruppe PU, die vier phasengleichen Stränge V1-V4 zur Phasenstranggruppe PV und die vier phasengleichen Stränge W1-W4 zur Phasenstranggruppe PW.

Weiterhin sind gemäß der Erfindung die Phasenstranggruppen PU, PV, PW phasenzyklisch und Pol für Pol in den Statornuten des Stators verlegt. Im Beispiel der vorliegenden FIG 5 belegt die Phasenstranggruppe PU die Nuten 1 bis 4, 13 bis 16, 25 bis 28 und 37 bis 40 entsprechend der Polzahl PZ=4 der elektrischen Maschine. Die beiden Phasenstranggruppen PV bzw. PW sind gegenüber der Phasenstranggruppe PU um 8 bzw. 4 Nuten versetzt angeordnet.

Gemäß der Erfindung ist je Pol und Phasenstranggruppe PU, PV, PW jeweils ein der Polzahl PZ entsprechender Nutbereich N1-N4 vorhanden. Im vorliegenden Beispiel der FIG 5 belegt eine Phasenstranggruppe PU, PV, PW einen Nutbereich aus vier Nuten. Die Statornuten werden fortlaufend und entsprechend der Polzahl der elektrischen Maschine zyklisch durchnummeriert und zwar gemäß einer Folge N1, N2, N3, N4, N1, N2, ..., d.h. entsprechend dem Modulo der Polzahl der elektrischen Maschine.

Schließlich erfolgt gemäß der Erfindung die Nutbelegung so, dass die phasengleichen Stränge U1-U4, V1-V4, W1-W4 entsprechend ihrer Nummerierung gleichmäßig auf die jeweiligen Nuten bzw. Nutpositionen N1, ..., N4 der zugehörigen Nutbereiche N1-N4 verteilt sind.

Dies soll gemäß dem vorliegenden Beispiel der FIG 5 an einem einzelnen Strang U1 der Phasengruppe PU erläutert werden. Demnach belegt der Strang U1 beim ersten Pol die Nut 1 an einer Nutposition N1, beim zweiten Pol die Nut 14 an einer Nutposition N2, beim dritten Pol die Nut 27 an einer Nutposition N3 und schließlich beim dritten Pol die Nut 40 an einer Nutposition N4. Sämtliche Nutpositionen N1,... N4 eines Nutbereichs N1-N4 sind somit durch den Strang U1 der Phasengruppe PU gleichverteilt belegt.

Entsprechend einer Ausführungsform der Erfindung sind gemäß dem Beispiel der vorliegenden FIG 5 die phasengleichen Stränge U1-V4, V1-V4, W1-W4 entsprechend ihrer Nummerierung von Pol zu Pol zyklisch durchgetauscht. Dies ist in der FIG 5 durch die langgestreckten Kreise mit jeweils einem Richtungspfeil, der die zyklische Durchtauschrichtung anzeigt, symbolisiert.

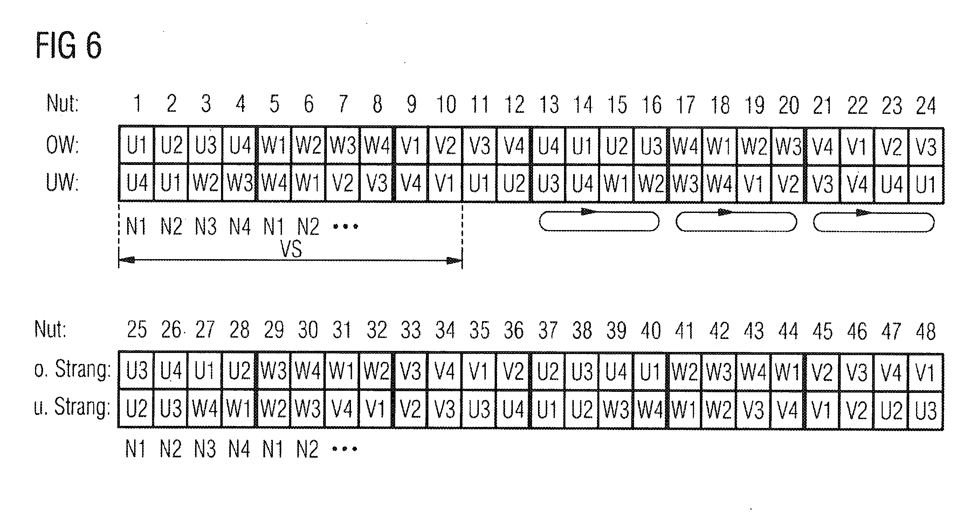

FIG 6 zeigt beispielhaft einen zweiten Nutbelegungsplan mit einer oberen und unteren Wicklungsschicht OW, UW, die gemäß der Erfindung um eine Sehnung VS versetzt sind. Die Nutbelegung der oberen Wicklungsschicht OW entspricht der Nutbelegung gemäß der vorherigen FIG 5. Die zweite, das heißt die untere Wicklungsschicht UW, ist gegenüber der oberen Wicklungsschicht OW um beispielhaft 10 Nuten versetzt.

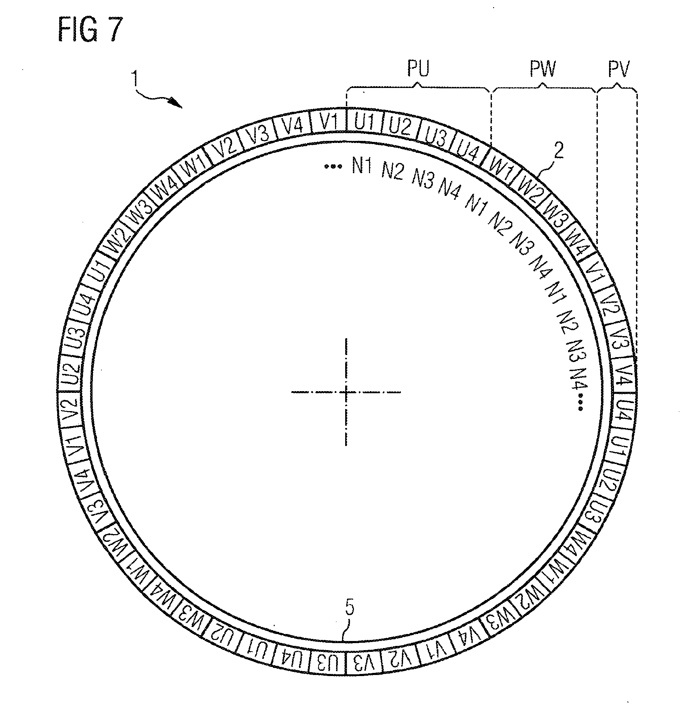

FIG 7 zeigt einen Querschnitt durch eine elektrische Maschine 1 mit der Nutbelegung gemäß FIG 5. Die vorliegende FIG 7 zeigt zum besseren Verständnis nochmals die zyklische gleichmäßige Verteilung phasengleicher Stränge U1-U4, V1-V4, W1-W4 auf die jeweiligen Nuten bzw. Nutpositionen N1, ..., N4 der zugehörigen Nutbereiche N1-N4. Die Darstellung erfolgt entsprechend ihrer tatsächlichen räumlichen Anordnung im Innenumfang des Stators 2 der elektrischen Maschine 1.

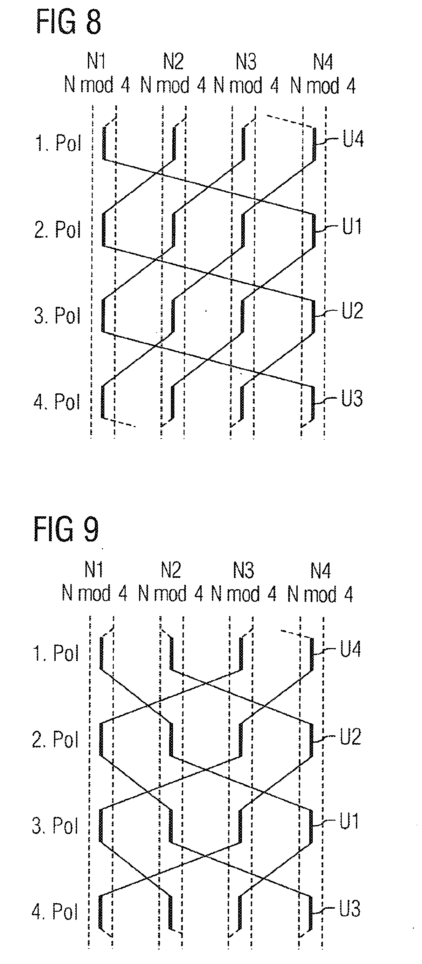

FIG 8 zeigt schematisch die Verteilung der phasengleichen Stränge U1-U4, V1-V4, W1-W4 entsprechend ihrer Nummerierung und Pol für Pol auf die Nuten N1, ..., N4 der zugehörigen Nutbereiche N1-N4.

Im Beispiel der FIG 8 wird die Verteilung der phasengleichen Stränge U1-U4, V1-V4, W1-W4 am Beispiel des phasengleichen Stränge U1-U4 der Phase U gezeigt. Die Verteilung der beiden verbleibenden Phasen V, W erfolgt versetzt um vier bzw. acht Nuten entlang des Innenumfangs des Stators der elektrischen Maschine. Im Beispiel der FIG 8 sind, von oben nach unten verlaufend, die jeweiligen Nutpositionen der phasengleichen Stränge U1-U4 vom 1. Pol bis zum 4. Pol dargestellt. An den 4. Pol schließt sich wiederum der 1. Pol an. In der FIG 8 sind senkrecht und strichliert jeweils gleiche Nutpositionen N1, ..., N4 zur möglichen Belegung der parallelen phasengleichen Stränge U1-U4 eingezeichnet. Senkrechte und dick gezeichnete Linien zeigen die Belegung eines der phasengleichen Stränge U1-U4 in der entsprechenden Nutposition N1, ..., N4 an. Die quer verlaufenden und dünn gezeichneten Linien zeigen die Verschaltung der phasengleichen Stränge U1-U4 am Ende eines Wickelkopfes an.

Die Belegung der Nuten erfolgt beispielhaft gegensinnig zur Nutbelegung gemäß FIG 5. Diese Darstellung soll zeigen, dass zu einer möglichen Nutbelegung immer auch eine dazu gegensinnige Nutbelegung im Sinne der Drehrichtung des stromerregten Drehfeldes möglich ist.

Gemäß der Erfindung erfolgt die Nutbelegung derart, dass die phasengleichen Stränge U1-U4 entsprechend ihrer Nummerierung gleichmäßig auf die Nutpositionen N1, ..., N4 der zugehörigen Nutbereiche N1-N4 verteilt sind.

Beim 1. Pol nimmt der Strang U1 gemäß dem Beispiel der FIG 8 beispielhaft die Nutposition N1 ein, das heißt, die erste Nutposition N1 innerhalb des Nutbereichs N1-N4. Die erste Position N1 folgt gemäß der mathematischen Modulo-Funktion aus dem Rest der Division aus der aktuellen fortlaufenden Nutnummer und dem Wert 4, welcher der Polzahl entspricht.

Beim 2. Pol nimmt der Strang U1 beispielhaft die Nutposition N4 gemäß der Modulo-Funktion N4 = 16 mod 4 ein, wobei die Zahl 16 der fortlaufende Nutnummer entspricht. Zum besseren Verständnis wurde anstelle der eigentlichen mathematischen Modulo-Folge 0 - 1 - 2 - 3 - 0 - 1 ... die gängigere Folge 1 - 2 - 3 - 4 - 1 - ... gewählt, wobei die Nutposition N4 der eigentlichen mathematisch richtigen Nutposition N0 entsprechen würde.

Beim 3. Pol nimmt der Strang U1 die Nutposition N3 gemäß der Modulo-Funktion N3 = 27 mod 4 ein, wobei die Zahl 27 der fortlaufende Nutnummer entspricht.

Beim 4. Pol nimmt der Strang U1 die Nutposition N2 gemäß der Modulo-Funktion N2 = 38 mod 4 ein, wobei die Zahl 38 der fortlaufende Nutnummer entspricht.

FIG 9 zeigt schematisch die Verteilung der phasengleichen Stränge U1-U4, V1-V4, W1-W4 entsprechend ihrer Nummerierung und Pol für Pol auf die Nutpositionen N1, ..., N4 der zugehörigen Nutbereiche N1-N4 gemäß einer alternativen Ausführungsform zu FIG 8.

Im Beispiel der FIG 9 wird die Verteilung der phasengleichen Stränge erneut am Beispiel der phasengleichen Stränge U1-U4 der Phase U gezeigt. Die Verteilung der beiden verbleibenden Phasen V, W erfolgt versetzt um vier bzw. acht Nuten entlang des Innenumfangs des Stators der elektrischen Maschine.

Die Verteilung gemäß FIG 8 unterscheidet sich von der Verteilung der einzelnen Stränge U1-U4 in der Hinsicht, dass die Belegung der Nuten von Pol zu Pol sich um maximal zwei Nutpositionen unterscheidet. In diesem Sinne erfolgt die Verteilung in Umfangrichtung des Stators gleichmäßiger.

Im Vergleich dazu ändert sich die Nutposition des Stranges U1 vom 1. Pol zum 2. Pol gleich um 3 Nutpositionen. Bei einer Nutbelegung gemäß FIG 8 nimmt die Sprungweite mit der Polzahl der elektrischen Maschine zu, während die Sprungweite bei einer Nutbelegung gemäß FIG 9 auf maximal 2 beschränkt bleibt.

Zusammenfassend weist die elektrische Maschine 1 einen Stator 2 und einen Rotor 5 auf, wobei der Stator 2 Statornuten 8 aufweist, in denen eine Statorwicklung 4 mit redundanten zumindest dreiphasigen Wicklungssystemen verlegt U1, V1, W1; U2, V2, W2 ist. Erfindungsgemäß weist die elektrische Maschine 1 eine Vielzahl von Polen mit einer Polzahl PZ von mindestens vier auf. Die elektrische Maschine 1 weist eine Anzahl NZ von Statornuten 8, die dem Produkt aus einer Phasenzahl und dem Quadrat der Polzahl PZ oder einem ganzzahligen Vielfachen davon entspricht. Zudem weist die elektrische Maschine eine der Polzahl PZ entsprechende Anzahl von zumindest dreiphasigen Wicklungssystemen U1, V1, W1; ...; U4, V4, W4 auf. Jeweils eine der Polzahl PZ entsprechende Anzahl von phasengleichen Strängen U1-U4, V1-V4, W1-W4 ist je zu einer Phasenstranggruppe PU, PV, PW zusammengefasst. Die Phasenstranggruppen PU, PV, PW sind phasenzyklisch und Pol für Pol in den Statornuten 8 des Stators 2 verlegt. Je Pol und Phasenstranggruppe PU, PV, PW ist ein der Polzahl PZ entsprechender Nutbereich N1-N4 vorhanden und die Nutbelegung erfolgt derart, dass die phasengleichen Stränge U1-U4, V1-V4, W1-W4 entsprechend ihrer Nummerierung gleichmäßig auf die Nutpositionen N1, ..., N4 der zugehörigen Nutbereiche N1-N4 verteilt sind.

Die Erfindung betrifft einen elektrischen Antrieb, welcher eine derartige elektrische Maschine 1 sowie mindestens einen Umrichter 11-14 zur elektrischen Versorgung der redundanten und zumindest dreiphasigen Wicklungssysteme 4 der elektrischen Maschine 1 aufweist.

## Patentansprüche

1. Elektrische Maschine mit einem Stator (2) und einem Rotor (5), wobei der Stator (2) Statornuten (8) aufweist, in denen eine Statorwicklung (4) mit redundanten und zumindest dreiphasigen Wicklungssystemen (U1, V1, W1; U2, V2, W2) verlegt ist, wobei
a) die elektrische Maschine eine Vielzahl von Polen mit einer Polzahl (PZ) von mindestens vier aufweist,
b) die elektrische Maschine eine Anzahl (NZ) von Statornuten (8) aufweist, die dem Produkt aus einer Phasenzahl und dem Quadrat der Polzahl (PZ) der elektrischen Maschine oder einem ganzzahligen Vielfachen davon entspricht,
c) die elektrische Maschine eine der Polzahl (PZ) entsprechende Anzahl von Wicklungssystemen (U1, V1, W1; ...; U4, V4, W4) aufweist,
d) jeweils eine der Polzahl (PZ) entsprechende Anzahl von phasengleichen Strängen (U1-U4, V1-V4, W1-W4) zu je einer Phasenstranggruppe (PU,PV,PW) zusammengefasst ist,
e) die Phasenstranggruppen (PU, PV, PW) phasenzyklisch und Pol für Pol in den Statornuten (8) des Stators (2) verlegt sind,
**dadurch gekennzeichnet,**
f) **dass** je Pol und Phasenstranggruppe (PU,PV,PW) jeweils ein der Polzahl (PZ) entsprechender Nutbereich (N1-N4) vorhanden ist und
g) **dass** die Nutbelegung so erfolgt, dass die phasengleichen Stränge (U1-U4, V1-V4, W1-W4) entsprechend ihrer Nummerierung gleichmäßig auf die Nutposition (N1,...,N4) der zugehörigen Nutbereiche (N1-N4) verteilt sind.

2. Elektrische Maschine nach Anspruch 1, **dadurch gekennzeichnet, dass** die phasengleichen Stränge (U1-V4, V1-V4, W1-W4) entsprechend ihrer Nummerierung von Pol zu Pol zyklisch durchgetauscht sind.

3. Elektrische Maschine nach Anspruch 1, **dadurch gekennzeichnet, dass** sich die Nutbelegungen von phasengleichen Strängen (U1-V4, V1-V4, W1-W4) um maximal zwei Nutpositionen von Pol zu Pol entsprechend ihrer Nummerierung unterscheiden.

4. Elektrische Maschine nach Anspruch 2 oder 3, **dadurch gekennzeichnet,**
- **dass** der Stator (2) eine Zweischichtwicklung mit einer oberen und einer unteren Wicklungsschicht (OW,UW) aufweist und
- **dass** die obere und untere Wicklungsschicht (OW,UW) um eine Sehnung (VW) gegeneinander versetzt sind.

5. Elektrische Maschine nach einem der vorangegangenen Ansprüche, **dadurch gekennzeichnet, dass** die elektrische Maschine eine Synchronmaschine, insbesondere ein Synchronmotor, ist.

6. Elektrische Maschine nach einem der Ansprüche 1 bis 4, **dadurch gekennzeichnet, dass** die elektrische Maschine eine Asynchronmaschine, insbesondere ein Asynchronmotor, ist.

7. Elektrische Maschine nach einem der vorangegangenen Ansprüche, **dadurch gekennzeichnet , dass** die elektrische Maschine eine Großmaschine mit einer Nennleistung von mindestens 10 kW, insbesondere von mindestens 1 MW, ist.

8. Elektrische Maschine nach einem der vorangegangenen Ansprüche, **dadurch gekennzeichnet, dass** die in den Statornuten (8) verlegten redundanten und mindestens dreiphasigen Wicklungssysteme (U1, V1, W1;...;U4, V4,W4) elektrisch derart ausgelegt sind, dass die elektrische Maschine bei Ausfall oder fehlender Einspeisung eines Wicklungssystems (U1, V1, W1;...; U4, V4, W4) weiterhin mit ihrer Nennleistung bzw. ihrem Nenndrehmoment betreibbar ist.

9. Elektrische Maschine nach einem der vorangegangenen Ansprüche, **dadurch gekennzeichnet, dass** die elektrische Maschine eine 4-polige Maschine ist, welche vier in den Statornuten (8) verlegte redundante und dreiphasige Wicklungssysteme (U1, V1, W1; ... ; U4, V4, W4) aufweist.

10. Elektrischer Antrieb, welcher eine elektrische Maschine (1) nach einem der vorangegangenen Ansprüche sowie zumindest einen Umrichter (11-14) zur elektrischen Versorgung der redundanten und zumindest dreiphasigen Wicklungssysteme (U1, V1, W1;...; U4, V4, W4) der elektrischen Maschine (1) aufweist.

11. Elektrischer Antrieb nach Anspruch 10, **dadurch gekennzeichnet, dass** der elektrische Antrieb zumindest eine der Polzahl (PZ) der elektrischen Maschine (1) entsprechende Anzahl von Umrichtern (11-14) zur elektrischen Versorgung der redundanten und zumindest dreiphasigen Wicklungssysteme (U1, V1, W1; ...; U4, V4, W4) der elektrischen Maschine (1) aufweist.

12. Elektrischer Antrieb nach Anspruch 10 oder 11, **da** - **durch gekennzeichnet**, dass die Umrichter (11-14) phasenstarr zueinander betreibbar sind.

13. Elektrischer Antrieb nach einem der Ansprüche 10 bis 12, **dadurch gekennzeichnet, dass** die Umrichter (11-14) Frequenzumrichter sind.

## Claims

1. Electrical machine having a stator (2) and a rotor (5), with the stator (2) having stator slots (8) in which a stator winding (4) with redundant and at least three-phase winding systems (U1, V1, W1; U2, V2, W2) is laid,
a) the electrical machine having a multiplicity of poles, with the number of poles (PZ) being at least 4,
b) the electrical machine having a number (NZ) of stator slots (8) corresponding to the product of the number of phases and the square of the number of poles (PZ) of the electrical machine, or an integer multiple thereof,
c) the electrical machine having a number of winding systems (U1, V1, W1; ...; U4, V4, W4) corresponding to the number of poles (PZ),
d) the number of identical-phase winding sections (U1-U4, V1-V4, W1-W4) which correspond to the number of poles (PZ) being in each case combined to form in each case one phase winding-section group (PU, PV, PW),
e) the phase winding-section groups (PU, PV, PW) being laid cyclically phase-by-phase and pole-by-pole in the stator slots (8) in the stator (2), **characterized**
f) **in that** a slot area (N1-N4) which corresponds to the number of poles (PZ) is in each case provided for each pole and phase winding-section group (PU, PV, PW), and
g) **in that** the slots are filled such that the identical-phase winding sections (U1-U4, V1-V4, W1-W4) are distributed uniformly, corresponding to their numbering, between the slot position (N1, ..., N4) of the associated slot areas (N1-N4).

2. Electrical machine according to Claim 1, **characterized in that** the identical-phase winding sections (U1-U4, V1-V4, W1-W4) are interchanged cyclically pole-by-pole, corresponding to their numbering.

3. Electrical machine according to Claim 1, **characterized in that** the slot fillings with identical-phase winding sections (U1-U4, V1-V4, W1-W4) differ by a maximum of two slot positions from pole-to-pole, corresponding to their numbering.

4. Electrical machine according to Claim 2 or 3, **characterized**
- **in that** the stator (2) has a two-layer winding with an upper and a lower winding layer (OW, UW) and
- **in that** the upper and the lower winding layer (OW, UW) are offset with respect to one another by one winding pitch (VW).

5. Electrical machine according to one of the preceding claims, **characterized in that** the electrical machine is a synchronous machine, in particular a synchronous motor.

6. Electrical machine according to one of Claims 1 to 4, **characterized in that** the electrical machine is an asynchronous machine, in particular an asynchronous motor.

7. Electrical machine according to one of the preceding claims, **characterized in that** the electrical machine is a large machine with a rating of at least 10 kW, in particular of at least 1 MW.

8. Electrical machine according to one of the preceding claims, **characterized in that** the redundant and at least three-phase winding systems (U1, V1, W1; ...; U4, V4, W4) which are laid in the stator slots (8) are electrically designed such that the electrical machine can still be operated at its rating or its rated torque in the event of failure of or lack of feed to one winding system (U1, V1, W1; ...; U4, V4, W4).

9. Electrical machine according to one of the preceding claims, **characterized in that** the electrical machine is a 4-pole machine which has 4 redundant and three-phase winding systems (U1, V1, W1; ...; U4, V4, W4) which are laid in the stator slots (8).

10. Electrical drive which has an electrical machine (1) according to one of the preceding claims, and has at least one converter (11-14) for the electrical supply to the redundant and at least three-phase winding system (U1, V1, W1; ...; U4, V4, W4) in the electrical machine (1).

11. Electrical drive according to Claim 10, **characterized in that** the electrical drive has at least one number of converters (11 to 14) which number corresponds to the number of poles (PZ) of the electrical machine (1), for the electrical supply to the redundant and at least three-phase winding systems (U1, V1, W1; ...; U4, V4, W4) in the electrical machine (1).

12. Electrical drive according to Claim 10 or 11, **characterized in that** the converters (11-14) can be operated locked in phase to one another.

13. Electrical drive according to one of Claims 10 to 12, **characterized in that** the converters (11-14) are frequency converters.

## Revendications

1. Machine électrique comprenant un stator (2) et un rotor (5), le stator (2) ayant des encoches (8) dans lesquelles un enroulement (4) de stator ayant des systèmes (U1, V1, W1, ; U2, V2, W2) d'enroulement redondants et au moins triphasés est posé, dans lequel
a) La machine électrique a une pluralité de pôles en ayant un nombre (PZ) de pôles d'au moins quatre,
b) La machine électrique a un certain nombre (NZ) d'encoches (8) de stator, qui correspond au produit d'un nombre de phases par le carré du nombre (PZ) de pôles de la machine électrique ou un multiple entier de ce produit,
c) La machine électrique a un nombre de systèmes (U1, V1, W1, ; ...... ; U4, V4, W4) d'enroulement correspondant au nombre (PZ) de pôles.
d) respectivement un nombre, correspondant au nombre (PZ) de pôles, de brins (U1 à U4, V1 à V4,W2 à W4) de même phase, est rassemblé respectivement en un groupe (PU, PV, PW) de brins de phase,
e) les groupes (PU, PV, PW) de brins de phase sont posés cycliquement en phase et pôle pour pôle dans les encoches (8) du stator (2),
**caractérisée**
f) **en ce que** pour chaque pôle et groupe (PU, PV, PW) de brins de phase, il y a respectivement une partie (N1 à N4) d'encoche correspondant au nombre (PZ) de pôles et,
g) **en ce que** l'occupation des encoches s'effectues de façon à ce que les brins (U1 à U4, V1 à V4, W1 à W4) de même phase soient répartis en fonction de leur numérotation uniformément sur la position (N1, ......., N4) des encoches des parties (N1 à N4) d'encoche associées.

2. Machine électrique suivant la revendication 1,
**caractérisée en ce que** les brins (U1 à U4, V1 à V4, W1 à W4) de même phase sont échangés cycliquement de pôle à pôle conformément à leur numérotation.

3. Machine électrique suivant la revendication 1,
**caractérisée en ce que** les occupations d'encoche par des brins (U1 à U4, V1 à V4, W1 à W4) de même phase se distinguent d'au maximum deux positions d'encoche de pôle à pôle conformément à leur numérotation.

4. Machine électrique suivant la revendication 2 ou 3, **caractérisée,**
- **en ce que** le stator (2) a un enroulement à deux couches ayant une couche (OW) supérieure et une couche (UW) inférieure et,
- **en ce que** la couche (OW) supérieure et la couche (UW) inférieure sont décalées l'une par rapport à l'autre d'un pas (VW).

5. Machine électrique suivant l'une des revendications précédentes,
**caractérisée en ce que** la machine électrique est une machine synchrone, notamment un moteur synchrone.

6. Machine électrique suivant l'une des revendications 1 à 4,
**caractérisée en ce que** la machine électrique est une machine asynchrone notamment un moteur asynchrone.

7. Machine électrique suivant l'une des revendications précédentes,
**caractérisée en ce que** la machine électrique est une grosse machine ayant une puissance nominale d'au moins 10 kW, notamment d'au moins 1 MW.

8. Machine électrique suivant l'une des revendications précédentes,
**caractérisée en ce** les systèmes (U1, V1, W1, ; ...... ; U4, V4, W4) redondants et au moins triphasés posés dans les encoches (8) du stator sont conçus électriquement de façon à ce que la machine électrique puisse, en cas de panne ou de défaut d'alimentation d'un système (U1, V1, W1, ; ...... ; U4, V4, W4) d'enroulement, continuer à fonctionner à sa puissance nominale ou à son couple de rotation nominal.

9. Machine électrique suivant l'une des revendications précédentes,
**caractérisée en ce que** la machine électrique est une machine à 4 pôles, qui a quatre systèmes (U1, V1, W1, ; ...... ; U4, V4, W4) d'enroulement redondants et triphasés posés dans les encoches (8) du stator.

10. Entraînement électrique qui a une machine (1) électrique suivant l'une des revendications précédentes ainsi qu'au moins un convertisseur (11 à 14) pour l'alimentation électrique des systèmes (U1, V1, W1, ; ...... ; U4, V4, W4) redondants et au moins triphasés de la machine (1) électrique.

11. Entraînement électrique suivant la revendication 10,
**caractérisé en que** l'entraînement électrique a, pour l'alimentation électrique des systèmes (U1, V1, W1 ; U4, V4, W4) d'enroulement redondants et au moins triphasés, de la machine (1) électrique, au moins un nombre de convertisseurs (11 à 14) correspondant au nombre (PZ) de pôles de la machine (1) électrique.

12. Entraînement électrique suivant la revendication 10 ou 11,
**caractérisé en que** les convertisseurs (11 à 14) peuvent fonctionner d'une manière rigide en phase les uns par rapport aux autres.

13. Entraînement électrique suivant la revendication 10 à 12,
**caractérisé en que** les convertisseurs (11 à 14) sont des convertisseurs de fréquence.
